**Europäisches Patentamt**

**European Patent Office**

**Office européen des brevets**

(11) Veröffentlichungsnummer: **0 184 632 B1**

(12) **EUROPÄISCHE PATENTSCHRIFT**

(45) Veröffentlichungstag der Patentschrift: **27.02.91**

(51) Int. Cl.⁵: **G01C 21/16**, G01C 25/00

(21) Anmeldenummer: **85112970.0**

(22) Anmeldetag: **12.10.85**

(54) **Anordnung zur Initialisierung und/oder Rekalibrierung eines Tochter-Trägheitsnavigationssystems.**

(30) Priorität: **13.12.84 DE 3445463**

(43) Veröffentlichungstag der Anmeldung:
**18.06.86 Patentblatt 86/25**

(45) Bekanntmachung des Hinweises auf die
Patenterteilung:
**27.02.91 Patentblatt 91/09**

(84) Benannte Vertragsstaaten:
**DE FR GB SE**

(56) Entgegenhaltungen:

**IEEE TRANSACTIONS ON AEROSPACE AND ELECTRONIC SYSTEMS, Band AES-16, Nr. 1, Januar 1980, Seiten 53-65, IEEE, New York, US; I.Y. BAR-ITZHACK et al.: "Accurate INS transfer alignment using a monitor gyro and external navigation measurements"**

**REVIEW OF SCIENTIFIC INSTR., Band 51, Nr. 3, März 1980, Seiten 583-590, IEEE, New York, US; Dr. J.W. DIESEL: " Fundamental accuracy limitations in in-flight alignment of inertial navigators"**

(73) Patentinhaber: **Bodenseewerk Gerätetechnik GmbH
Alte Nussdorfer Strasse 15 Postfach 1120
D-7770 Überlingen/Bodensee(DE)**

(72) Erfinder: **Hoos, Dieter
Forellenweg 11
D-7770 Überlingen(DE)**
Erfinder: **Wagner, Dieter Wolfgang
Alte Owinger Strasse 42a
D-7770 Überlingen(DE)**
Erfinder: **Boch, Wolfgang
Brühlstrasse 36
D-7777 Salem-Mimmenhausen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
D-5620 Velbert 11 Langenberg(DE)**

Rank Xerox (UK) Business Services

## Beschreibung

Die Erfindung betrifft eine Anordnung zur Initiali sierung und/oder Rekalibrierung eines Tochter-Träg heitsnavigationssystems durch Vergleich mit einem Mutter-Trägheitsnavigationssystem unter Verwendung von Filtermitteln.

Trägheitsnavigationssysteme bestimmen die Position eines Fahrzeugs oder FlugKörpers im Raum durch zweimalige zeitliche Integration der gemessenen Beschleunigungswerte. Sie enthalten Beschleuni gungsmesser und zusätzlich Drehgeschwindigkeits sensoren, durch welche die Lage des Trägheitsnavi gationssystems im Raum und damit die Richtungen der gemessenen Beschleunigungswerte bestimmt werden. Es gibt Fälle, in denen ein Mutter-Trägheitsnaviga tionssystem und ein Tochter-Trägheitsnavigations system vorgesehen sind, die sich gegeneinander bewegen können, wobei aber deren gegenseitige Bewegung bestimmt werden muß.

Ein Beispiel hierfür sind Flugzeuge, bei denen mehrere Trägheitsnavigationssysteme redundant an voneinander entfernten, miteinander flexibel verbundenen Stellen des Flugzeugs angebracht sind. Eine solche Anordnung von Trägheitsnavigations systemen wird beispielsweise bei Flugzeugen für militärische Zwecke angewandt, um eine größere Unempfindlichkeit gegen Treffer zu erzielen. Bei Zerstörung eines Trägheitsnavigationssystems durch einen Treffer soll nach Möglichkeit ein anderes, davon entferntes Trägheitsnavigationssystem noch funktionsfähig bleiben. Durch Lageveränderungen des Flugzeugs und durch Verwindungen der Flugzeugzelle können jedoch die Sensoren der beiden Trägheits navigationssysteme unterschiedliche Signale liefern. Es ist wichtig, die relative Lage der beiden Trägheitsnavigationssysteme zueinander laufend zu erfassen.

Eine weitere Anwendung ist der Vergleich der Meßwerte eines in einem Flugzeug vorgesehenen Trägheitsnavigationssystems als Mutter-Träg heitsnavigationssystem mit einem Tochter-Träg heitsnavigationssystem, das in einem an dem Flug zeug angebrachten Flugkörper vorgesehen ist. Im Flugzeug selbst ist als Mutter-Trägheitsnaviga tionssystem üblicherweise ein Trägheitsnavigations system mit Sensoren hoher Güte, also beispielsweise sehr geringer Kreiseldrift, vorgesehen. Für einen vom Flugzeug abzuschie ßenden Flugkörper wird üblicherweise aus Kostengründen ein Trägheitsnavi gationssystem wesentlich geringerer Güte verwendet. Ein solches Tochter-Trägheitsnavigationssystem in einem vom Flugzeug abzuschießenden Flugkörper hat die Aufgabe, den Flugkörper zunächst in eine bestimmte Position relativ zu dem Flugzeug zu lenken, in welcher der Pilot mit Hilfe der am Flugzeug vorge sehenen Meßeinrichtungen ein Zielob jekt geortet hat. Diese Position kann relativ weit von dem Flugzeug entfernt sein, so daß die Zielver folgungssensoren des Flugkörpers noch nicht an sprechen. Der Flugkörper wird auf diese Weise von seinem eigenen Trägheitsnavigationssystem von außen nicht störbar in die Nähe des Zielobjektes geführt. Dort kann dann der Zielverfolgungssensor des Flug körpers das Zielobjekt erfassen und den Flugkörper auf das Zielobjekt führen. Es ist auf diese Weise nicht erforderlich, daß das abschie ßende Flugzeug selbst sich in diese Position begibt, in welcher es unter Umständen durch Feindeinwirkung selbst ge fährdet wäre.

Es ist erforderlich, vor dem Einsatz das Tochter-Trägheitsnavigationssystem auszurichten, also seine Lage in bezug auf Nord zu bestimmen, und Sensorfehler zu Kalibrieren. Standardverfahren zur Bestimmung der Ausrichtung von Trägheitsnaviga tionssystemen basieren auf dem Kreiselkompaß verfahren. Dieses Verfahren erweist sich aber als ungeeignet, wenn die Driften der Kreisel wesentlich größer als $0,01°/h$ und die Nullpunktsfehler der Beschleunigungsmesser wesentlich größer als $10^{-4}$ g sind. Das Kreiselkompaß verfahren ist auch für die vorstehend geschilderte Flugkörperanwendung nicht geeignet, weil die Ausrichtzeit üblicherweise mehr als 10 Minuten beträgt. Bei der vorstehend geschilderten Anwendung wird eine Initialisierung des Tochter-Trägheitsnavigationssystems innerhalb weniger Sekunden gefordert.

Die Bestimmung einer Anfangslage eines Trägheits navigationssystems wird als Initialisierung bezeichnet und sie kann durch Vergleich der Information des Tochter-Trägheitsnavigationssystems mit der des Mutter-Trägheitsnavigationssystems erfolgen.

Ein anderes Problem ist folgendes: Wenn für das Tochter-Trägheitsnavigationssystem Sensoren, also z.B. Kreisel und Beschleunigungsmesser, geringerer Güte verwendet werden, dann werden die von dem Tochter-Trägheitsnavigationssystem gelieferten Positionssignale zunehmend stärker mit Fehlern behaftet, wenn sich das Tochter-Trägheitsnavigationssystem nach der Initialisierung von dem Mutter-Trägheitsnaviga tionssystem gelöst hat. Es ist wünschenswert, die Sensor fehler zu bestimmen, so daß sie bei der Navigation rech nerisch berücksichtigt werden können. Dies wird als Rekali brierung bezeichnet.

Durch "IEEE Transactions on Aerospace and Electronic Systems", AES 16, Nr. 1 (1980), 53 bis 65, ist eine An ordnung mit einem als Plattformsy stem ausgebildeten Mutter-Trägheitsnavigationssy stem und einem ebenfalls als Platt formsystem ausgebildeten Tochter-Trägheitsnavigations sy stem bekannt, bei welcher das Tochter-Trägheitsnaviga tionssystem mit Hilfe eines Kalman-Filters nach dem Mutter-Trägheitsnaviga tionssystem ausgerichtet wird. Eine ähnliche An ordnung ist beschrieben in "Review of Scientific In struments" Band 51, Nr. 3 (1980), 583 bis 590. Plattform systeme, bei denen Beschleunigungsmesser auf einer durch Kreisel im Raum stabilisierten Plattform angeordnet sind, sind mechanisch sehr aufwendig.

Die nicht vorveröffentlichte EP-A-O 179 197 zeigt ein Mutternavigationssystem mit Sensoren hoher Güte und ein Tochternavigationssystem mit billigeren Sensoren geringerer Güte. Es soll die Lage des Tochternavigationssystems rela tiv zu dem Mutternavigationssystem ermittelt werden. Gleich zeitig sollen Sensorfehlerparameter des Tochternavigations systems bestimmt werden. Zu diesem Zweck werden durch Inte gration von Winkelgeschwindigkeitsdifferenzen Schätzwerte von Ausrichtfehlern erzeugt. Beschleunigungsdifferenzen werden mit den Ausrichtfehlern auf einem System in das an dere transformiert und die transformierten Beschleunigungs differenzen werden mit im gleichen (anderen) Bezugssystem gemessenen Beschleunigungsdifferenzen verglichen. Die Differenz der Beschleunigungsdifferenzen beaufschlagt einen den Eingang der integrierenden Mittel korrigierenden Regler.

Der Erfindung liegt die Aufgabe zugrunde, mit mechanisch einfachen Trägheitsnavigationssystemen eine Anordnung zu schaffen zur Initialisierung und/oder Rekalibrierung eines Tochter-Trägheitsnavigationssystems durch Vergleich mit einem Mutter-Trägheitsnavigationssystem.

Erfindungsgemäß wird diese Aufgabe dadurch gelöst, daß

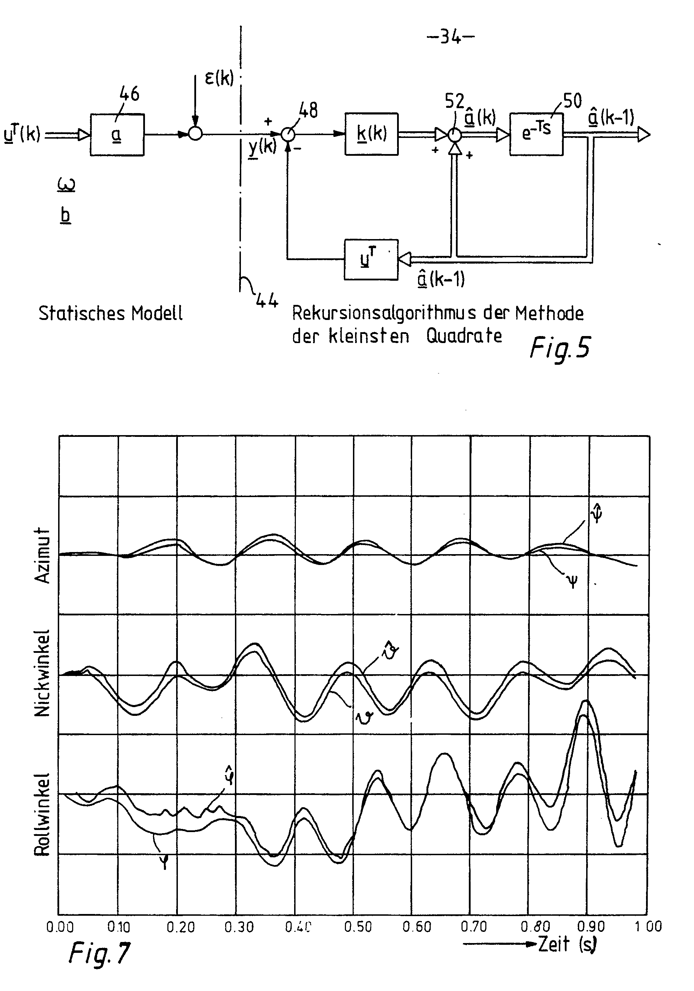

(a) das Mutter-Trägheitsnavigationssystem und das Tochter-Trägheitsnavigationssystem "Strapdown"-Trägheitsnavi gationssysteme mit trägerfest angeordneten Sensoren sind,
(b) das Tochter-Trägheitsnavigatonssystem ge- genüber dem Mutter-Trä- gheitsnavigationssystem beweglich ist,
(c) die Filtermittel ein Modell enthalten (Fig. 5, Fig. 6), welches die gegenseitigen Beziehungen der beiden Trägheitsnavigationssysteme nachbildet,
(d) auf das Modell (Fig. 5, Fig. 6) die Differenzen ein ander entsprechenden Meßgrößen der Sensoren von Mutter- und Tochter-Trägheitsnavigationssystemen aufgeschaltet sind und
(e) die Filtermittel Mittel zur Erzeugung optimaler Schätz werte der Ausrichtwinkel zur Initialisierung der Lage winkel des Tochter-Trägheits- navigationssystems bzw. von optimalen Schätz- werten der Sensorfehler zur Korrektur von Sen- sorfehlern des Tochter-Trägheitsnavigations sy- stems anhand dieses Modells enthalten.

Es werden somit bei der Erfindung Strapdown- Trägheitsnavi gationssysteme vorgesehen. Damit wird der mechanische Auf wand und die Störan- fälligkeit kreiselstabilisierter Platt formen vermie- den. Dafür sind die Sensoren ohne Stabili sierung den z.B. durch Schwingungen oder Verwindungen her vorgerufenen relativen Lageänderungen unterworfen. Es geht nicht wie bei den vorerwähnten, bekannten Anordnungen nach "IEEE Transactions on Aerospace and Electronic Systems" um eine Ausrichtung einer stabilisierten Plattform nach Nord, sondern um die Berücksichtigung laufender, relativer Lage änderungen, die unmittelbar in die Sensorsignale eingehen würden. Zu diesem Zweck sieht die Erfindung ein Filter vor, das ein Modell der gegenseitigen Beziehungen von Mutter- und Tochter-Trägheitsnavigationssystem darstellt. Auf dieses Modell werden die Differenzen der Sensor- signale aufgeschaltet. Unter Zugrundelegung die- ses Modells liefert das Filter die Lage- und die Sensorfehler.

Ein Ausführungsbeispiel der Erfindung ist nachstehend unter Bezugnahme auf die zugehörigen Zeichnungen näher erläutert:

Fig. 1     zeigt als einen Anwendungsfall der An- ordnung in perspektivischer Darstel- lung ein Flugzeug, welches das (nicht dargestellte) Mutter-Träg heitsnavigationssystem enthält, mit an den Enden der Tragflächen angebrachten Flug körpern, welche Tochter- Trägheitsnavigations systeme enthalten, wobei in einer vergrößerten Dar- stellung die Schwingungen der Trag- flächen veranschaulicht sind;

Fig. 2     ist eine schematisch-perspektivische Dar stellung eines Strapdown- Trägheitsnaviga tionssystems;

Fig. 3     zeigt für eine typische Tragflächenschwingung den zeitlichen Verlauf des Rollwinkels des Tochter-Trägheitsnavigationssystems;

Fig. 4     ist ein schematisches Blockschaltbild der Anordnung zur Initialisierung und Rekali brierung des Tochter- Trägheitsnavigations systems;

Fig. 5     ist eine Blockdarstellung eines nach der Methode der kleinsten Fehlerquadrate ar beitenden Filters zur Ermittlung von opti malen Schätzwerten der Sensorfehler;

Fig. 6     ist eine Blockdarstellung eines diskreten Kalman-Filters zur Ermittlung optimaler Schätzwerte der Ausrichtwinkel für die Initialisierung;

Fig. 7　zeigt das Ergebnis einer Simulation der dynamischen Ausrichtwinkel und des Verlaufs der zugehörigen, durch das Kalman-Filter berechneten Schätzwerte.

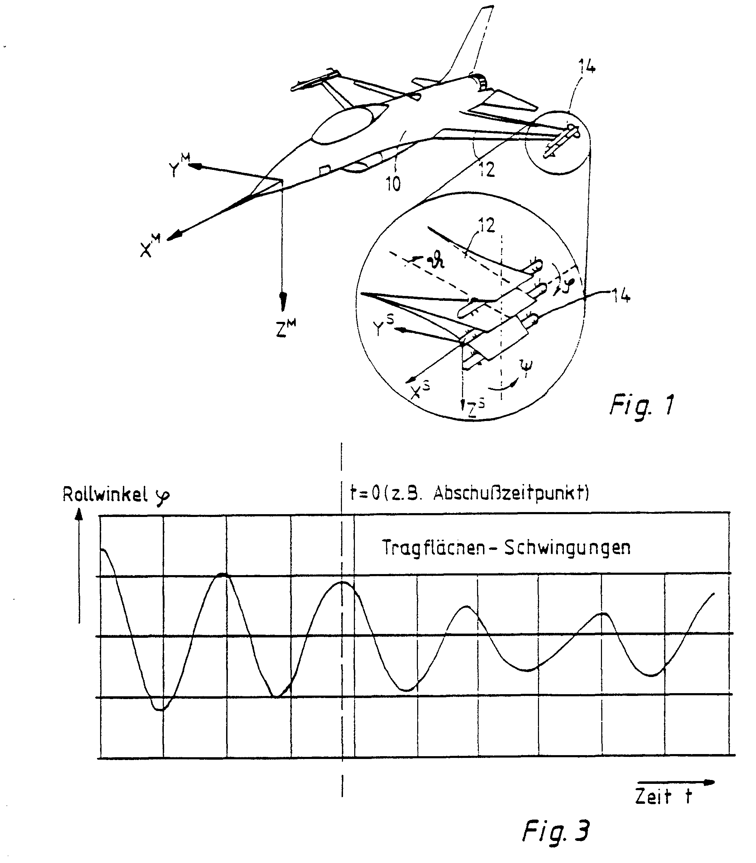

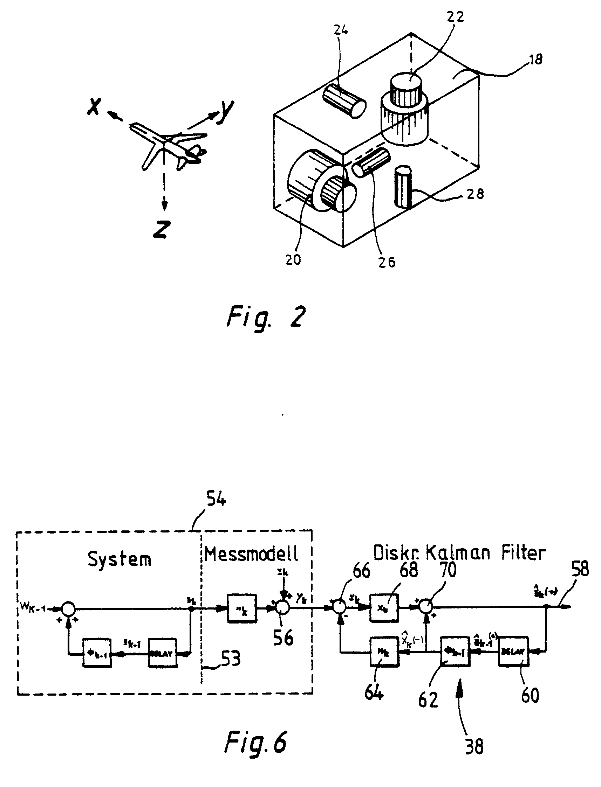

In Fig. 1 ist ein Flugzeug 10 dargestellt, das am Ende seiner Tragfläche 12 einen Flugkörper 14 trägt. Das Flugzeug 10 trägt ein Mutter-Trägheitsnavigationssystem, welches drei Koordinatenachsen $x^M$, $y^M$ und $z^M$ festgelegt. Der Flugkörper 14 trägt ein Tochter-Trägheitsnavigationssystem, welches drei Koordinatenachsen $x^S$, $y^S$ und $z^S$ festgelegt. Ein solches Trägheitsnavigationssystem ist in Fig.2 schematisch-perspektivisch dargestellt und mit 18 bezeichnet. Das Trägheitsnavigationssystem 18 ist ein Strapdown-Trägheitsnavigationssystem, d.h. ein Trägheitsnavigationssystem, bei welchem die Beschleunigungsmesser nicht auf einer stabilisierten Plattform sondern zusammen mit Wendekreiseln flugkörperfest angeordnet sind und die von den Wendekreiseln nach Integration gelieferten Lagewinkel rechnerisch berücksichtigt werden. Das Trägheitsnavigationssystem 18 enthält zwei Kreisel 20 und 22, deren Drallachsen z.B. in der Richtung der $x^S$-Achse bzw. der $z^S$-Achse liegen und deren Eingangsachsen mit den Richtungen der $y^S$-Achse und der $z^S$-Achse bzw. der $x^S$-Achse und $y^S$-Achse zusammenfallen. Das Trägheitsnavigationssystem 18 enthält weiterhin drei Beschleunigungsmesser 24,26, 28, deren Eingangsachsen mit der $x^S$-Achse bzw. der $y^S$-Achse bzw. der $z^S$-Achse zusammenfallen. Die Beschleunigungsmesser 24,26,28 sprechen auf die Komponenten einer Beschleunigung an. Die Wendekreisel 20 und 22 liefern Winkelgeschwindigkeiten un die Meßachsen des Systems 18, woraus die Lagewinkel errechnet werden, so daß die Komponenten der Beschleunigungen in ein erdfestes Koordinatensystem transformiert werden können. Die so transformierten Komponenten werden zweimal integriert und liefern so die Position des Flugzeuges 10 bzw. des Flugkörpers 14. Das ist bekannte Technik und daher hier nicht im einzelnen beschrieben. Da sich bei solchen Trägheitsnavigationssystemen Position und Lage durch Integration ergeben, müssen die Anfangsbedingungen bestimmt und eingegeben werden, also z.B. Position, Geschwindigkeit und Lage zum Zeitpunkt des Abschusses des Flugkörpers 14.

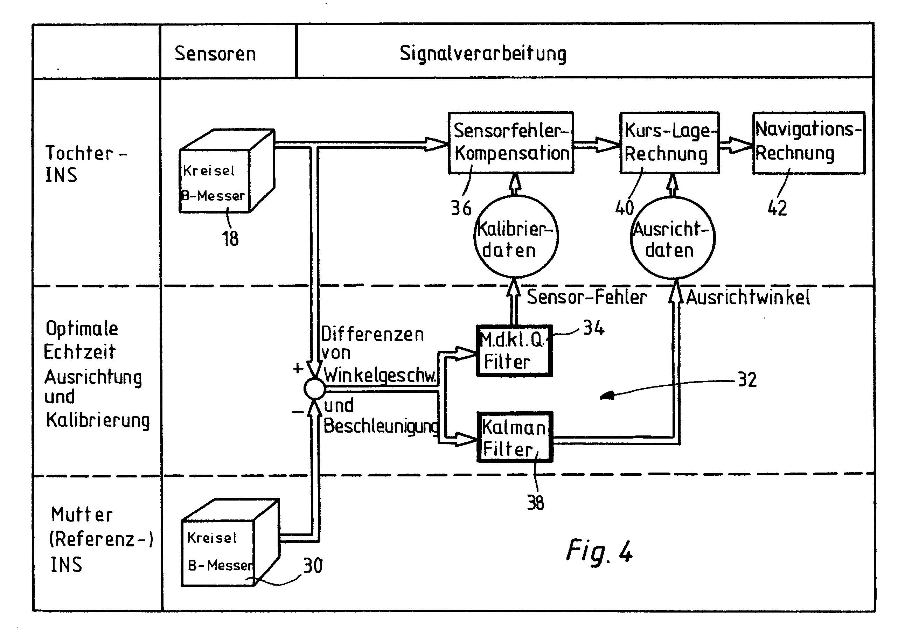

Wenn, wie in dem dargestellten Beispiel, der Flugkörper 14 am Ende der Tragfläche 12 angeordnet ist, dann kann sich durch Verformung oder Schwingungen der Tragfläche 12 infolge von Böen oder Manövern die Lage des Flugkörpers 14 gegenüber dem Flugzeug 10 ändern. Diese Änderung kann in einer Bewegung um die Rollachse um einen Winkel $\phi$ bestehen, wie in Fig.1 dargestellt ist, aber auch in einer Nickbewegung um einen Winkel $\vartheta$ bei einer Verwindung der Tragfläche 12, und ggf. in einer Bewegung um die Hochachse um einen Winkel $\psi$. Die Bewegungen sind in der Regel gedämpfte, u.U. miteinander gekoppelte Schwingungen. Eine typische Tragflügelschwingung der in Fig.1 dargestellten Art ist in Fig.3 als Ausrichtwinkel $\phi$ über der Zeit t dargestellt.

Infolgedessen weichen die Sensorsignale des Mutter-Trägheitsnavigationssystems 30 (Fig.4) von den Sensorsignalen des Tochter-Trägheitsnavigationssystems ab, das weiter mit 18 bezeichnet werden soll. Eine solche Abweichung tritt auch auf durch Sensorfehler wie z.B. Nullpunkt- und Skalenfaktorfehler der Wendekreisel 20,22 und der Beschleunigungsmesser 24,26 und 28.

Es werden nun, wie bei 32 in Fig.4 dargestellt ist, die Differenzen entsprechender Sensorsignale der beiden Trägheitsnavigationssysteme 18 und 30 gebildet, also beispielsweise die Differenz der Winkelgeschwindigkeiten, die um die $x^S$-Achse und um die $x^M$-Achse gemessen werden, oder die Differenz der Beschleunigungen die in Richtung der $x^S$-Achse von dem Beschleunigungsmesser 24 und in Richtung der $x^M$-Achse von dem entsprechenden Beschleunigungsmesser des Mutter-Trägheitsnavigationssystem gemessen werden. Die so erhaltenen Differenzsignale sind auf Filtermittel 32 geschaltet. Die Filtermittel 32 enthalten ein Filter 34, das nach der Methode der kleinsten Fehlerquadrate aus den erhaltenen Differenzen Schätzwerte für die Sensorfehler des Tochter-Trägheitsnavigationssystems 18 bildet. Die Sensorfehler des Mutter-Trägheitsnavigationssystems werden dabei als vernachlässigbar angesehen. Diese Schätzwerte liefern Kalibrierdaten mittels derer die Signale des Tochter-Trägheitsnavigationssystems anschließend, d.h. auch nach dem Lösen des Flugkörpers 14 vom Flugzeug 10 laufend korrigiert werden, wie in Fig.4 durch Block 36 dargestellt ist. Die Filtermittel 32 enthalten weiterhin ein Kalman-Filter 38, auf welches die Differenzen der einander entsprechenden Sensorsignale ebenfalls aufgeschaltet sind. Dieses Kalman-Filter 38 liefert die Ausrichtwinkel, die als Ausrichtdaten in die Kurs- und Lageberechnung eingehen, die durch einen Block 40 symbolisiert ist und in welche weiter, wie dargestellt, die hinsichtlich der Sensorfehler kompensierten Sensorsignale des Tochter-Trägheitsnavigationssystems 18 eingegeben werden. Durch das Ergebnis der Kurs- und Lagerechnung mit den initialisierten Ausrichtwinkeln $\phi$, $\vartheta$ und $\psi$ für die Lage des Tochter-Trägheitsnavigationssystems 18 werden die Signale der Beschleunigungsmesser 24,26, 28 in ein erdfestes Koordinatensystem transformiert. Mit den so transformierten Beschleunigungskomponenten erfolgt, wie durch Block 42 dargestellt ist, die Navigationsrechnung.

Links von der Linie 44 in Fig.5 ist die dem Filter 34 zugrundeliegende Vorstellung von der "realen Welt" dargestellt. Auf das Filter 34 werden die Differenzen der Drehgeschwindigkeiten und Beschleu nigungen aufgeschaltet, die von Tochter- und Mutter-Trägheitsnavigationssystem 18 bzw. 30 ge messen werden, also beispielsweise $\omega_x^S - \omega_x^M$ usw. Diese Differenzen sind zu einem Vektor $y$ (k) zu sammengefaßt, wobei "k" der Index des Taktes der Abtastung und Verarbeitung der Meßwerte ist. Nach dem links von Linie 44 dargestellten Modell hängen die Komponenten dieses Vektors von Größen ab, die in einer Matrix $u^T$ (k) zusammengefaßt sind, und von den Sensorfehlern, die zu einem Vektor a zusammengefaßt und in Fig. 5 durch einen Block 46 dargestellt sind. So ist z.B.

$$\omega SX - \omega MX = \omega SX \bullet SFK_X + B_X + E_X,$$

wobei $\omega_{SX}$ und $\omega_{MX}$ die von den Tochter- bzw. Mutter-Trägheitsnavigationssystem gemessenen Winkelgeschwindigkeiten um die x-Achse sind, $SFK_X$ der Skalenfaktorfehler des Wendekreisels für die x-Achse ist und $B_X$ der entsprechende Nullpunkt fehler ist. Die Differenz ist ein Element des Vek tors $y$ (k), $\omega SX$ und "1" sind Elemente der Matrix $u^T$ (k) und $SFK_X$ und $B_X$ sind Elemente des Vektors a . Dem Produkt $u^T$ $(k)^X$ . a überlagert ist ein Vektor $\epsilon(k)$, der das Meßrauschen repräsentiert.

Der Vektor $y$ (k) ist auf das Filter 34 geschaltet, das optimale Schätzwerte für die Komponenten des Vektors a liefert. Dies geschieht nach einem Rekur sionsalgorithmus:

$$\hat{a}\ (k) = \hat{a}\ (k-1) + k\ (k)\ y\ (k) - u^T\ (k)\ .\ \hat{a}\ (k-1),$$

wie beispielsweise aus dem Aufsatz von V.Krebs und H.Thöm "Parameter-Identifizierung nach der Methode der kleinsten Quadrate - ein Überblick" in der Zeitschrift "Regelungstechnik und Prozeß-Daten verarbeitung" 22(1974), Seiten 1 bis 32, bekannt ist. Von dem Vektor $y$ (k) wird im Punkt 48 ein Vek tor $u^T$ $\hat{a}$ (k-1) subtrahiert, wobei $\hat{a}$ (k-1) der durch ein Zeitglied 50 um einen Takt verzögerte Wert von $\hat{a}$ (k) ist. Der so erhaltene Differenzvektor wird mit Faktoren einer Gewichtsmatrix k (k) multipliziert. Zu dem daraus erhaltenen Vektor wird im Punkt 52 der Vektor $\hat{a}$ (k-1) der Schätzwerte für die Parameter addiert. Das ergibt einen Vektor $\hat{a}$ (k) , der über das Zeitglied 50 mit einem Takt Verzögerung als Vektor $\hat{a}$ (k-1) ausgegeben wird.

Fig. 6 zeigt das ähnlich aufgebaute, diskrete Kalman-Filter 38. Solche Kalman-Filter sind bei spielsweise beschrieben in dem Buch von Arthur Gelb "Applied Optimal Estimation", The MTI Press, 1974, Seiten 107-113, insbesondere Figur 4.2-2 auf Seite 111.

Wiederum zeigt das Blockdiagramm links von der Linie 53 in Fig.6 die Vorstellung von der realen Welt, die dem Kalman-Filter 38 zugrunde liegt: Der dynamische Verlauf des Zustandsvektors $x$ (k) ist in diskreter Zeit durch die Differenzengleichung

$$x\ (k) = \Phi\ (k-1)\ .\ x\ (k-1) + w\ (k-1)$$ beschrieben,

wobei hier x ein Vektor ist, der als Komponenten die Ausrichtwinkel und ihre Ableitungen sowie konstante Winkelanteile und die Anregung der flexiblen Verbiegung der Tragflächen (oder sonsti ger Strukturen) enthält. Die Matrix $\phi$ (k-1) verknüpft linear den Vektor im Takt (k-1) mit dem gleichen Vektor im Takt k. Die Elemente der Matrix $\phi$ hängen von den mechanischen und geometrischen Eigenschaften der Struktur ab. Der Vektor w stellt stochastische Störungen dar.

Rechts von der Linie 53 in dem gestrichelt umrande ten Block 54 ist das Meßmodell dargestellt, d.h. der Zusammenhang zwischen Winkelgeschwindigkeits- und Beschleunigungsdifferenzen und den Zustands größen x (k) . Dieser lineare Zusammenhang wird durch die Matrix H repräsentiert. Den so erhaltenen Winkelgeschwindigkeits- und Beschleunigungs differenzen ist noch das Meßrauschen v (k) bei 56 überlagert. Das ergibt den auf das Kalman-Filter 38 aufgeschalteten Vektor y (k).

Das Kalman-Filter bildet dieses geschilderte Modell nach und variiert die Parameter des Modells so, daß eine optimale Übereinstimmung zwischen den Meßwer ten und den vom Modell gelieferten Schätzwerten erreicht wird.

Am Ausgang 58 des Kalman-Filters 38 erscheint ein Schätzvektor $\hat{x}(k)$ für den Zustandsvektor x (k). Dieser geschätzte Zustandsvektor $\hat{x}(k)$ wird, wie durch Block 60 dargestellt ist, um einen Takt verzögert und als $\hat{x}(k-1)$ mit der Matrix $\phi$ (k-1) multipliziert, wie durch den Block 62 dargestellt ist. Der so erhaltene Vektor wird mit der Meß matrix H(k) multipliziert, die durch Block 64 dargestellt ist. Dieser Vektor repräsentiert eine Schätzung y(k) für den Messvektor y(k) . In 66 wird die Differenz dieser beiden Vektoren gebildet. Der erhaltene Differenzvektor wird mit einer Verstär kungsmatrix K-(k), dargestellt durch Block 68, multipliziert. Der so erhaltene Vektor wird bei 70 dem Vektor überlagert, der durch Multiplikation der Matrix $\phi$ (k-1) mit dem Vektor $\hat{x}(k-1)$ erhalten wurde. Das ergibt den Vektor $\hat{x}(k)$.

Fig.7 zeigt das Ergebnis einer Simulation der dyna mischen Ausrichtwinkel $\psi$ , $\vartheta$ , $\phi$ und der von dem beschriebenen Kalman-Filter 38 gelieferten Schätz werte.

## Ansprüche

1. Anordnung zur Initialisierung und/oder Rekalibrierung eines Tochter-Trägheitsnavigationssystems durch Ver gleich mit einem Mutter-Trägheitsnavigationssystem unter Verwendung von Filtermitteln,

**dadurch gekennzeichnet, daß**

(a) das Mutter-Trägheitsnavigationssystem (18) und das Tochter-Trägheitsnavigationssystem (30) "Strapdown"-Trägheitsnavigationssysteme mit trägerfest angeordneten Sensoren sind,

(b) das Tochter-Trägheitsnavigationssystem (30) gegen über dem Mutter-Trägheitsnavigationssystem (18) beweglich ist,

(c) die Filtermittel (34, 38) ein Modell enthalten, welches die gegenseitigen Be ziehungen der beiden Trägheitsnavigationssysteme (18, 30) nachbildet,

(d) auf das Modell die Differenzen einander entsprechender Meßgrößen der Sensoren von Mutter- und Tochter-Trägheitsnavigations systemen (18, 30) aufgeschaltet sind und

(e) die Filtermittel (34, 38) Mittel zur Erzeugung optimaler Schätzwerte der Ausrichtwinkel zur Initialisierung der Lagewinkel des Tochter-Trägheitsnavigationssystems (30) bzw. von opti malen Schätzwerten der Sensorfehler zur Korrektur von Sensorfehlern des Tochter-Trägheitsnavigations systems (30) anhand dieses Modells enthalten.

2. Anordnung nach Anspruch 1, **dadurch gekennzeich net, daß** die Filtermittel ein nach der Methode der kleinsten Fehlerquadrate arbeitendes Filter zur Erzeugung der Schätzwerte der Sensorfehler enthalten.

3. Anordnung nach Anspruch 1, **dadurch gekennzeich net,** daß die Filtermittel ein Kalman-Filter zur Erzeugung der Schätzwerte der Ausrichtwinkel enthalten.

## Claims

1. Arrangement for initializing and/or recalibrating an inertial slave navigation system by comparison to an inertial master navigation system by using filter means,

**characterized in that**

(a) the inertial master navigation system (18) and the inertial slave navigation system (30) are "strapdown" inertial navigation systems having sensors stationary with respect to a carrier,

(b) the inertial slave navigation system (30) is displaceable relative to the inertial master navigation system (18),

(c) the filter means (34, 38) contain a model reproducing the reciprocal relations between the two inertial navigation systems (18, 30),

(d) the differences of mutually corresponding measured values of the sensors of the inertial master and slave navigation systems (18, 30) are applied to the model, and

(e) the filter means (34, 38) contain means for generating optimum estimated values of the angles of alignment for initializing the position angles of the inertial slave navigation system (30) and optimum estimated values of the sensor errors, respectively, for correcting sensor errors of the inertial slave navigation system (30) by means of this model.

2. Arrangement ase set forth in claim 1, **characterized in that** the filter means contain a filter operating according to the method of least error squares for generating the estimated values of the sensor errors.

3. Arrangement as set forth in claim 1, **characterized in that** the filter means contain a Kalman filter for generating the estimated values of the angles of alignment.

## Revendications

1. Disposition déstinée à initialiser et/ou recalibrer un système de navigation inertielle à répétition par comparaison au système-mère de navigation inertielle en utilisant des moyens de filtres, **caractérisée par le fait que**

(a) le système-mère de navigation inertielle (18) et le système de navigation inertielle à répétition (30) sont des systèmes de navigation inertielle "strapdown" ayant des détecteurs disposés stationnairement par rapport au support,

(b) le système de navigation inertielle à répétition (30) est mobile par rapport au système-mère de navigation (18) inertielle,

(c) les moyens de filtres (34, 38) comprennent un modèle reproduisant les relations reciproques des deux systèmes de navigation inertielle (18, 30),

(d) les différences de grandeurs de mesure correspondantes des détecteurs du système-mère de navigation inertielle et du système de navigation inertielle à répétition (18, 30) sont appliquées au modèle, et

(e) les moyens de filtre (34, 38) comprennent des moyens déstinés à engendrer des valeurs estimatives optimales de l'angle d'alignement afin d'initialiser les angles d'orientation du système de navigation inertielle à répétition (30), et des valeurs estimatives optimales des erreurs de détecteur afin de corriger des erreurs de détecteur du système de navigation inertielle à répétition au moyens de ce modèle.

2. Disposition selon la revendication 1, **caractérisée par le fait que** les moyens de filtre comprennent un filtre opérant selon la méthode des plus petits carrés d'erreurs afin d'engendrer les valeurs estimatives des erreurs du détecteur.

3. Disposition selon la revendication 1, **caractérisée par le fait que** les moyens de filtre comprennent un filtre Kalman déstiné à engendrer les valeurs estimatives des angles d'alignement.

Fig. 1

Rollwinkel φ

t = 0 (z.B. Abschußzeitpunkt)

Tragflächen- Schwingungen

Zeit t

Fig. 3

8

Fig. 2

Fig. 6

| | Sensoren | Signalverarbeitung |
|---|---|---|

**Tochter – INS**

Kreisel B-Messer 18

Sensorfehler-Kompensation 36

Kalibrier-daten

Kurs-Lage-Rechnung 40

Ausricht-daten

Navigations-Rechnung 42

**Optimale Echtzeit Ausrichtung und Kalibrierung**

Sensor-Fehler    Ausrichtwinkel

Differenzen von Winkelgeschw. und Beschleunigung

+    –

M.d.kl.Q. Filter 34

Kalman Filter 38

32

**Mutter (Referenz–) INS**

Kreisel B-Messer 30

Fig. 4

EP 0 184 632 B1

—34—

Statisches Modell

Rekursionsalgorithmus der Methode
der kleinsten Quadrate

*Fig.5*

*Fig.7*

0.00   0.10   0.20   0.30   0.40   0.50   0.60   0.70   0.80   0.90   1.00

Zeit (s)